Europäisches Patentamt

European Patent Office

Office européen des brevets

(11) Publication number: **0 293 110**
**A2**

## EUROPEAN PATENT APPLICATION

(21) Application number: 88304347.3

(22) Date of filing: 13.05.88

(51) Int. Cl.4: **C08G 18/10 , C08G 59/40 ,**
**C08G 18/38 , C08G 18/80**

(30) Priority: 15.05.87 US 50079

(43) Date of publication of application:
**30.11.88 Bulletin 88/48**

(84) Designated Contracting States:
**BE CH DE FR GB IT LI NL SE**

(71) Applicant: INTEREZ, INC.
9814 E. Bluegrass Parkway
Jeffersontown Kentucky 40299(US)

(72) Inventor: Hunter, Joe M.
8204 Casualwood Way
Fern Creek Kentucky 40291(US)
Inventor: Lee, John E.
12017 Highway 60
Sellersburg Indiana 47172(US)

(74) Representative: De Minvielle-Devaux, Ian
Benedict Peter et al
CARPMAELS & RANSFORD 43, Bloomsbury
Square
London WC1A 2RA(GB)

(54) Polyamine-polyisocyanate reaction products as epoxy resin curing agents.

(57) Curing agents for epoxy resins are made from
the reaction of a blocked polyisocyanate and a
polyamine wherein at least one mole of the
polyamine is reacted for each equivalent of blocked
isocyanate group.

EP 0 293 110 A2

# POLYAMINE-POLYISOCYANATE REACTION PRODUCTS AS EPOXY RESIN CURING AGENTS

## Background of the Invention

The field of art to which this invention pertains is epoxy resin curing agents.

Epoxy resins and polyurethane resins have been used extensively in various coatings and plastic applications. In order to take advantage of the excellent properties of these resins, various attempts have been made to combine the epoxy group and the urethane group in the same composition.

Polyurethane resins have been blended with epoxy resins to form physical mixtures of the two components. Monomeric compounds or polymeric compounds which contain isocyanate functionality have been adducted to the hydroxyl groups of epoxy resins to chemically modify the epoxy resin.

Epoxy resins have been blended with blocked isocyanates. Blocked isocyanates are materials which are prepared by the direct chemical reaction of an isocyanate group with an active hydrogen containing material such as a phenol or alcohol. When a blocked polyisocyanate is blended with an epoxy resin which contains hydroxyl groups, the blend is relatively stable at room temperature. However, when heated, the blocked polyisocyanate will unblock and the isocyanate groups will then react with the hydroxyl groups on the epoxy resin forming a crosslinked composition.

Other methods for reacting isocyanate groups and epoxy resins involve forming a blend of a blocked isocyanate and an epoxy resin and adding a polyamine to the mixture. The amine will react simultaneously with the epoxy groups of the epoxy resin and the blocked isocyanate groups to form highly cured thermoset materials.

In U.S. Patent No. 4,031,050, amine adducts of epoxy resins are cured with blocked polyisocyanates. U.S. Patent No. 3,397,160 describes urethane modified epoxy esters. U.S. Patent No. 3,424,719 describes epoxy resins which are modified with urethane groups. In U.S. Patent No. 4,401,499, polyisocyanate compounds are first reacted with the alcoholic hydroxyl groups of an epoxy resin to form urethane prepolymers. When heated, the urethane groups dissociate and the reformed isocyanate groups react with the epoxy groups.

The reaction of a polyamine and a polyisocyanate is extremely fast and very difficult to control. The reaction is very exothermic and if reacted in large quantities can be explosive. Incremental addition of one component to the other results in immediate formation of gel particles and unusable product. Polyamines and polyisocyanates can be reacted in a solvent system at high dilution. However, such processes are uneconomical and require removal and recovery of a considerable amount of solvent.

## Summary of Invention

This invention is directed to amine terminated reaction products of polyamines and diisocyanates. In one aspect, this invention pertains to amine terminated reaction products of polyamines and diisocyanates which are useful as epoxy resin curing agents. In another aspect, this invention relates to a process for making amine terminated reaction products of polyamines and polyisocyanates.

By the process of this invention, a blocked polyisocyanate and a polyamine containing at least two amino nitrogen atoms and three amino hydrogen atoms are reacted in the ratio of 1 mole of the polyamine for each equivalent of blocked isocyanate group. In this reaction, the blocking agent on the isocyanate becomes unblocked and the amine group reacts with the isocyanate group forming a urea group. The resulting composition which is a blend of the amine terminated polyurea and the blocking agent is useful as a curing agent for epoxy resin.

## Description of the Invention

The polyisocyanates useful in this invention are aliphatic, cycloaliphatic, or aromatic diisocyanates which contain two isocyanate groups and no other groups which are reactive under the conditions of the process. Representative examples of aliphatic diisocyanates are trimethylene diisocyanate, tetramethylene diisocyanate, pentamethylene diisocyanate, hexamethylene diisocyanate, 1,3-butylene diisocyanate and the like. Cycloaliphatic diisocyanates include such compounds as 1,3-cyclopentane diisocyanate, 1,4-cyclohexane diisocyanate, isophorone diisocyanate and 1,2-cyclohexane diisocyanate. Aromatic diisocyanates include such compounds as metaphenylene diisocyanate, paraphenylene diisocyanate, 1,5-naphthalene diisocyanate, 2,4-toluene diisocyanate, 2,6-toluene diisocyanate, or mixtures of the two, dianisidine diisocyanate, 4,4′-diphenylether diisocyanate and the like.

The organic polyisocyanates used in this invention can also be prepolymers derived from a polyol and a diisocyanate wherein the polyol is a glycol, a polyether polyol or a polyester polyol. Examples of such polyols are ethylene glycol, propylene glycol, butylene glycol, hexanediol and the polyoxyalkylene glycols which are polyols formed from ethylene oxide, propylene oxide, butylene oxide, tetrahydrofuran and the like. Examples of such polyalkylene glycols include polyoxyethylene glycol having molecular weights of from about 200 to about 6,000, polyoxypropylene glycols having molecular weights of about 300 to about 3,000, polyoxytetramethylene glycols having molecular weights of about 400 to about 2,000 and the like. The particularly preferred polyoxyalkylene glycol is polyoxypropylene glycol having a molecular weight of about 2,000.

The blocking agents which are used to block the isocyanate groups in this invention are organic compounds having at least one active hydrogen groups. Examples of such compounds are phenols, oximes and lactams, such as phenol, ortho-, meta-, and para- cresol, nonyl phenol, bisphenol A, dimethyl ketoxime, caprolactam and 2-pyrrolidone. Preferred blocking agents are phenols, most preferably long chain alkyl phenols, e.g., nonyl phenol, which act as reactive plasticers for the resulting curing agents.

The blocked polyisocyanate is formed by reacting a sufficient quantity of blocking agent with the polyisocyanate to insure that no free isocyanate groups remain.

The polyamines which are reacted with the blocked isocyanate in this invention contain at least two amine nitrogen atoms per molecule, at least three amine hydrogen atoms per molecule and no other groups which are reactive in this invention. These polyamines can be aliphatic, cycloaliphatic, or aromatic and contain at least two carbon atoms per molecule. Useful polyamines contain 2 to about 6 amine nitrogen atoms per molecule, 3 to about 8 amine hydrogen atoms and 2 to about 20 carbon atoms. Examples of such amines are the alkylene polyamines, ethylene diamine, 1,2-propylene diamine, 1,3-propylene diamine, 1,2-butylene diamine, 1,3-butylene diamine, 1,4-butylene diamine, 1,5-pentylene diamine, 1,6-hexylene diamine, phenylene diamine, 4,4'-methylene dianiline, menthane diamine, 1,4-diamino cyclohexane and the like. Preferred polyamines are the alkylene polyamines, such as ethylene diamine, diethylene triamine, triethylene tetramine, tetraethylene pentamine, pentaethylene hexamine, dipropylene triamine, tributylene tetraamine and the like. Mixtures of amines can be used. The most preferred amines are the ethylene polyamines with the most preferred being triethylene tetramine and tetraethylene pentamine.

In carrying out the process of this invention, the diisocyanate is first blocked with the blocking agent using an amount of blocking agent at least equivalent to the isocyanate groups. The reaction of the blocking agent and the isocyanate groups is a well known reaction and can be conducted at room temperature up to about 150°C. In order to promote the reaction, well known urethane forming catalyst, such as dibutyltin dilaurate and the like, can be used. The blocked polyisocyanate is then reacted with the polyamine in the proportions of at least one mole of the polyamine for each blocked isocyanate equivalent group. This reaction is conducted at about 50°C to about 150°C until the adduction is completed as indicated by a change in titratable nitrogen content.

A preferred composition is prepared by first forming a prepolymer of a diisocyanate and a polyol, e.g., by reacting 2 moles of a diisocyanate with one mole of a polyol, thereby forming an isocyanate terminated prepolymer. The terminal isocyanate groups are then blocked with an appropriate blocking agent and the resulting composition is reacted with the polyamine.

The polyepoxides which are reacted with the composition of this invention are the well known polyepoxide resins which contain more than one 1,2 epoxy group per molecule. Examples of such polyepoxide resins are the glycidyl polyethers of polyhydric phenols. Such polyepoxide resins are derived from an epihalohydrin and a dihydric phenol and have epoxide equivalent weights of about 170 to about 4,000. Examples of epihalohydrins are epichlorohydrin, epibromohydride and epiidohydrin with epichlorohydrin being preferred. Dihydric phenols are exemplified by resorcinol, hydroquinone, p,p'-dihydroxydiphenyl propane (or bisphenol A as it is commonly called), p,p'-dihydroxy benzophenone p,p'-dihydroxydiphenyl, p,p'-dihydroxydiphenyl ethane, 1,5-dihydroxy naphthylene and the like. Epoxide resins based on Bisphenol A are preferred. These polyepoxide resins are well known in the art and are made in desired molecular weights by reacting the epihalohydrin and the dihydric phenol in various ratios or by reacting a dihydric phenol with a lower molecular weight polyepoxide resin. Additional useful polyepoxide resins are those which are made by reacting epichlorohydrin with a novolac resin wherein the epoxy resin contains more than two epoxy groups per molecule.

The amine terminated compositions of this invention and epoxy resins are blended together in the amount of about 0.5 to about 1.5 amine hydrogen equivalents for each epoxy group and, preferably about 0.8 to about 1.2 amine hydrogen equivalents. The blends are cured at room temperature or at elevated temperatures up to about 350°F.

The compositions of this invention can be compounded with fillers, reinforcing agents, dyes, pigments, and other additives depending upon the end use and the desired properties. The compositions can be dissolved in solvents, e.g., aromatic hydrocarbons, ethers, ether-esters, ether-alcohols, esters, alcohols, ketones and the like. A particularly preferred solvent is benzyl alcohol. The compositions of this invention find utility wherever thermosetting epoxy resins are generally used, i.e., as castings, adhesives, coatings, moldings, encapsulations and the like. The compositions are particularly useful in ambient temperature applications.

The following examples will describe the invention in more detail. Parts and percentages, unless otherwise indicated, are parts and percentages by weight.

### Example 1

To a suitable reactor were added 1,000 parts of polypropylene glycol having a molecular weight of 2,000. Water aspirator vacuum and heat were applied raising the temperature to 250°F to remove any water which might be present in the glycol. After cooling to 120°F, the polypropylene glycol was removed from the reactor and put in an addition funnel. 174 parts of toluene diisocyanate and 0.44 part of dibutyltin dilaurate were added to the reactor, the reactor contents were heated to 90°F and the polypropylene glycol was slowly added to the reactants over a one hour period while keeping the temperature between 90°F and 96°F. After one hour of heating at 96°F to 98°F, the free NCO content was 3.35 percent. 228 parts of nonyl phenol were then added and heating was continued for one hour raising the temperature to 110°F. The free NCO content was 2.12 percent. The temperature was then raised to 160°F and was held at 160°F for two hours. The free NCO content was then 0.147 percent. 600 parts of benzyl alcohol were added and when solution was obtained, the reaction product was removed from the reactor. The composition had a Gardner Holdt viscosity at 25°C of Y to Z and a Gardner color of less than one.

The product obtained from above was then stabilized with hydrochloric acid by reacting 1,000 parts of the product with 1.4 parts of concentrated hydrochloric acid (37 percent).

100 parts of the stabilized blocked isocyanate composition were blended with 6.7 parts of triethylene tetraamine by heating to 150°F until the reaction was complete. The resulting amine terminated composition had a Gardner Holdt viscosity at 25°C of $Z_4$ to $Z_5$ and a Gardner color of less than one.

To another portion (295 parts) of the stabilized blocked isocyanate product were added 20.2 parts of triethylene tetramine. The blend was heated to 150°F and was held at this temperature for one hour to complete the reaction of the unblocked isocyanate groups with the amine groups to form urea groups as evidenced by the reduction in titratable nitrogen content. The resulting amine terminated product had a Gardner Holdt viscosity at 25°C of $Z_5$-$Z_6$, a Gardner color of 2-3 and titratable nitrogen of 1.71 percent.

### Example 2

Using the same procedure described in Example 1, 1000 parts of polyoxypropylene glycol having an average molecular weight of 2000 were dehydrated by being heated to 250°F under vacuum. The glycol was cooled and was placed in an addition funnel. Toluene diiscoyanate, 174 parts, and dibutyltin dilaurate, 0.44 part, were placed in the reactor and the glycol was slowly added over one hour and 15 minutes with the temperature rising form 90°F to 105°F. After holding for 30 minutes at 105°F-164°F, the free NCO content was 0.21 percent. Benzyl alcohol, 600 parts, in admixture with 2.8 parts of concentrated hydrochloric acid (37 percent) were added at the temperature of 164°F. The temperature dropped to 150°F in 15 minutes and the reaction products was removed from the reactor and strained through an 80 mesh screen.

To 300 parts of the above described reaction product were added 18.2 parts of triethylene tetramine. The temperature was raised to 150°F and was held at 150°F for one hour to complete the adduction reaction as evidenced by the titratable nitrogen content of 1.56 percent. The Gardner-Holdt viscosity of the adduct at 25°C was $Z_5$ + and the Gardner color was 2.

### Example 3

To 300 parts of the blocked isocyanate intermediate reaction product of Example 2 were added 21.4 parts of isophorone diamine. The temperature was raised to 150°F and was held at 150°F for one hour. The resulting product had a Gardner-Holdt viscosity of $Z_6$ at 25°C and a Gardner color of less than one. The titratable nitrogen content was 0.61 percent.

## Example 4

The blocked isocyanate intermediate reaction product of Example 2 (300 parts) was reacted with 46.9 parts of Jet-amine DE-13, a propanediamine having an alkyl group of about 8 carbon on one amine nitrogen group obtained form Jetco Chemical Co., to form a composition having a Gardner-Holdt viscosity at 25° C of $Z_2$, a Gardner color of 3-4 and a titratable nitrogen content of 0.58 percent.

## Example 5

The curing agent of Example 2, 45 parts, was blended with 30 parts of a commercially available amido-amine curing agent (Epi-Cure 872, Interez, Inc.). The blend was mixed with 100 parts of a diglycidyl ether of Bisphenol A having an epoxide equivalent weight of 190. The time required for 100 grams of the mixture to gel was 31 minutes. The Shore D hardness of the gel was 68 after 16 hours, 70 after 24 hours, 77 after 96 hours and 79 after 7 days.

Five mil film drawdowns after 24 hours exhibited slight haze, slight "sweat-out" and toughness. After 96 hours, the films were tough. After 70 days, they were very slightly brittle.

Castings, 1/8 inch thick, were cured for 24 hours. The properties of the coating are listed in the Table.

## Example 6

The curing agent of Example 3 was blended with 30 parts of Epi-Cure 872 and the blend was mixed with 100 parts of the diglycidyl ether described in Example 6. The gel time for a 100 gram mass was 30 minutes. The Shore D after 16 hours was 30, after 24 hours 70, after 96 hours 79 and after 7 days 79.

The appearance of 5 mil film drawdowns after 24 hours was milky with slight "sweat-out" and toughness. After 7 days, the film remained tough.

Castings, 1/8 inch thick, were cured for 24 hours. The properties of the castings are listed in the Table.

## Example 7

The curing agent of Example 4, 52 parts, was blended with 35 parts of Epi-Cure 872. The blend was mixed with 100 parts of the diglycidyl ether described in Example 6. The gel time for a 100 gram mass was 40 minutes. The Shore D hardness after 16 hours was 60, after 24 hours 63, after 96 hours 72 and after 7 days 72.

The appearance of 5 mil film drawdowns after 24 hours was milky with moderate "sweat-out" and toughness. After 96 hours and 7 days, the film remained tough.

Castings, 1/8 inch thick, were cured for 24 hours. The properties of the castings are listed in the Table.

| Example | 5 | 6 | 7 |
|---|---|---|---|

## Properties

| | | | |
|---|---|---|---|
| Tensile Strength, psi | 4,270 | 4,399 | 3,067 |
| Tensile Modulus ($\times 10^6$) | 0.24 | 0.23 | 0.17 |
| Tensile Elongation (%) | 25 | 26 | 14 |
| Izod Impact | 0.84 | 0.91 | 0.62 |
| Heat Distortion | | | |
|     Temp. (°C) | 50 | 54 | 51 |
| Shore D Hardness | 79 | 79 | 72 |

## Tensile Shear Strength

| | | | |
|---|---|---|---|
|    at 23°C | 3,656 | 3,471 | 2,732 |
| After 1 week soak in water | | | |
|    at 49°C | 2,792 | 3,362 | 2,931 |
| After 60 minutes in water | | | |
|    at 200°F | 3,398 | 3,524 | 2,850 |

## Chemical Resistance

Weight gain (%)

| | | | |
|---|---|---|---|
| Water-24 hours | 0.30 | 0.31 | 0.30 |
| 5% Acetic Acid-24 hours | 0.83 | 0.69 | 0.92 |
| Xylene-24 hours | 5.22 | 0.58 | 7.58 |

The principles, preferred embodiments and modes of operation present invention have been described in the foregoing specification. The invention which is intended to be protected herein, however, is not to be construed as limited to the particular forms disclosed, since these are to be regarded as illustrating rather than restrictive. Variations and changes may be made by those skilled in the art without departing from the spirit of the invention.

## Claims

1. An amine terminated curing agent for epoxy resins which comprises the reaction product of:

   (A) a blocked polyisocyanate; and

   (B) a polyamine containing at least two amino nitrogen atoms and three amino hydrogen atoms wherein one mole of the polyamine is present for each equivalence of blocked isocyanate group.

2. The curing agent of Claim 1 wherein the blocking agent for the blocked polyisocyanate is selected from monohydric phenols, dihydric phenols, lactams and ketoximes.

3. The curing agent of Claim 2· wherein the blocking agent is a monohydric phenol.

4. The curing agent of Claim 3 wherein the blocking agent is nonyl phenol.

5. The curing agent of any of Claims 1-4 wherein the polyisocyanate is a diisocyanate.

6. The curing agent of any of Claims 1-4 wherein the polyisocyanate is the reaction product of a diisocyanate and an aliphatic polyol based on one mole of the diisocyanate for each hydroxyl group of the polyol.

7. The curing agent of Claim 6 wherein the polyol is a diol.

8. The curing agent of Claim 7 wherein the polyol is a polyoxyalkylene glycol having a molecular weight of 200 to 600.

9. The product of Claim 5 wherein the diisocyanate is the reaction product of 2 moles of a diisocyanate and one mole of an aliphatic diol.

10. The product of Claim 9 wherein the aliphatic diol is a polyoxypropylene glycol having a molecular weight of 1500 to 3000.

11. The product of any of Claims 1-10 wherein the polyamine is a polyethylene polyamine.

12. The product of Claim 11 wherein the polyamine is triethylene tetramine.

13. The product of any of Claims 1-10 wherein the polyamine is isophorone diamine.